Europäisches Patentamt

European Patent Office

Office européen des brevets

(19)

(11) Veröffentlichungsnummer: **0 143 311**
**A1**

## (12) EUROPÄISCHE PATENTANMELDUNG

(21) Anmeldenummer: **84112535.4**

(22) Anmeldetag: **17.10.84**

(51) Int. Cl.⁴: **A 22 C 11/02**

(30) Priorität: **28.10.83 DE 3339274**

(43) Veröffentlichungstag der Anmeldung: **05.06.85**
**Patentblatt 85/23**

(84) Benannte Vertragsstaaten: **AT CH DE FR GB IT LI NL SE**

(71) Anmelder: **VEMAG Verdener Maschinen- und Apparatebau GmbH, Weserstrasse 32, D-2810 Verden (Aller) (DE)**

(72) Erfinder: **Meinen, Georg H., Meicastrasse, D-2905 Edewecht (Oldb.) (DE)**

(74) Vertreter: **Eisenführ & Speiser, Martinistrasse 24, D-2800 Bremen 1 (DE)**

(54) **Portioniervorrichtung.**

(57) Eine Vorrichtung zum Portionieren von pastöser Füllmasse, insbesondere Würstchenbrät, ist offenbart. Die Füllmasse wird durch eine Fülldruckquelle unter Fülldruck gehalten und durch eine von einem Mengenmeßgerät gesteuerte Verschlußeinrichtung und/oder Abdrehvorrichtung in einzelne möglichst mengenkonstante Portionen aufgeteilt. Damit mit einfachen Mitteln kontinuierlich und berührungsfrei die tatsächlich in der Portioniervorrichtung transportierte Füllmassenmenge gemessen werden kann und mit dieser Messung die Portionierorgane, wie z.B. Verschlußeinrichtung und/oder Abdrehvorrichtung, gesteuert werden können, ist der Mengenmesser ein im Wege der Füllmasse hinter der Fülldruckquelle angeordnetes Mengenmeßgerät, das kontinuierlich die geförderte Füllmassenmenge mißt.

## EISENFÜHR & SPEISER
### Patentanwälte · European Patent Attorneys

*|*

Unser Zeichen:  **V 162**

Anmelder /Inh.:  **VEMAG**

Aktenzeichen:  **Neuanmeldung**

Datum:  **16. Oktober 1984**

Patentanwälte
Dipl.-Ing. Günther Eisenführ
Dipl.-Ing. Dieter K. Speiser
Dr.-Ing. Werner W. Rabus
Dipl.-Ing. Detlef Ninnemann
Dipl.-Ing. Jürgen Brügge

## Portioniervorrichtung

## B e s c h r e i b u n g

Die Erfindung betrifft eine Vorrichtung zum Portionieren von pastöser Füllmasse, insbesondere Wurstbrät, die durch eine Fülldruckquelle unter Fülldruck gehalten wird und durch eine von einem Mengenmeßgerät gesteuerte Verschlußeinrichtung und/oder Abdrehvorrichtung in einzelne möglichst mengenkonstante Portionen aufgeteilt wird.

Eine derartige Vorrichtung ist z.B. aus der DE-OS 30 18 793

Martinistraße 24          Telefon              Telecopierer          Telex                Datex-P
D-2800 Bremen 1    **0421-32 80 37**      0421-32 68 34        2 44020 fepat d    44 421040 311

## 2

bekannt. Bei dieser bekannten Portioniervorrichtung ist an bzw. vor der Fülldruckquelle, nämlich einem Füllzylinder ein Mengenmeßgerät angeordnet, das ein Steuersignal liefert, welches dem Zylinderhub und damit der transportierten Füllmasse proportional ist. Mit diesem Signal wird bei der bekannten Vorrichtung die Verschlußeinrichtung und im Anschluß daran die Abdrehvorrichtung gesteuert.

Die bekannte Vorrichtung hat den Nachteil, daß die transportierte Menge von Füllmasse nur indirekt gemessen werden kann, was bei Zustandsänderungen in der Füllmasse zu Meßungenauigkeiten und damit zu ungleichen Portionen führen kann. Es wird also bei der bekannten Vorrichtung nicht die tatsächlich transportierte Füllmassenmenge, sondern nur deren Sollwert gemessen.

Die Erfindung hat deshalb die Aufgabe, eine Portioniervorrichtung zu schaffen, die mit einfachen Mitteln kontinuierlich und berührungsfrei die tatsächlich transportierte Füllmassenmenge messen kann und mit dieser Messung die Portionierorgane, z.B. eine Verschlußeinrichtung und/oder eine Abdrehvorrichtung steuern kann.

Diese Aufgabe wird erfindungsgemäß dadurch gelöst, daß

der Mengenmesser ein im Wege der Füllmasse hinter der
Fülldruckquelle angeordnetes Mengenmeßgerät
ist, das kontinuierlich die geförderte Füllmassenmenge
mißt.

Vorteilhafterweise ist das Mengenmeßgerät ein magnetisch-induktiver Durchflußmesser, der im Füllmassenwege
zwischen Fülldruckquelle und Verschlußeinrichtung angeordnet ist.

Zum besonderen Vorteil ist es, wenn die Verschlußeinrichtung im Wege der Füllmasse am Ende des Füllmassenweges durch die Portioniervorrichtung angeordnet ist.

Dadurch wird erreicht, daß auch am Ende eines Portioniervorganges, z.B. eines Würstchenstranges, der volle
Fülldruck im gesamten Füllmassenweg bis zum Ende der
Ausstoßtülle aufrechterhalten wird, so daß beim Beginn
des Füllens oder Portionierens eines neuen Würstchenstranges bereits von Anfang an genau die vom Mengenmeßgerät
gesteuerte Füllmassenmenge gefördert wird.

Die Portionierung der Füllmasse kann, gesteuert durch das vom Mengenmeßgerät kommende Steuersignal, vorgenommen werden durch periodisches Öffnen und Schließen der Verschlußeinrichtung. In gleicher Weise kann aber auch direkt die Abdrehvorrichtung vom Mengenmeßgerät angesteuert werden, so daß sie bei Erreichen einer gewünschten Portion beginnt, die Wursthülle abzudrehen und dadurch die Brätmasse zu portionieren. In diesem Falle kann das Verschlußorgan entweder ebenfalls automatisch zu Beginn und zu Ende eines Würstchenstranges durch das mit dem Mengenmesser verbundene Steuergerät betätigt werden, oder aber von Hand betätigt werden, bevor der Portioniervorgang gestartet wird bzw. von Hand geschlossen werden, beim Ende eines Würstchenstranges.

Wenn die Verschlußeinrichtung am Ende des Füllmassenweges angeordnet ist, so kann sie vorteilhafterweise verwirklicht werden durch eine Ventilplatte, die an einer im Innern der Ausstoßhülle geführte Ventilstange gehalten ist. Diese Ventilstange kann vorteilhafterweise durch eine außerhalb und hinter der Tülle liegende Vorrichtung betätigbar sein. Wenn die Tülle mit einer der herkömmlichen Abdrehvorrichtungen versehen ist, ist es von Vorteil, wenn die Ventilstange an der Betätigungsvorrichtung leichtgängig drehbar gelagert ist.

Die Verschlußvorrichtung kann besonders vorteilhaft ein Umlenkschieber sein, der im Wege der Füllmasse zwischen dem Mengenmeßgerät und der Ausstoßtülle angeordnet ist. In diesem Falle ist eine Rückführleitung vorgesehen, die vom Umlenkschieber ausgehend zum Füllmassenweg vor der Fülldruckquelle und dem Mengenmeßgerät führt und diese miteinander verbindet. Dies hat den besonderen Vorteil, daß beim Verschließen des Verschlußorganes nicht die Fülldruckquelle abgestellt werden muß oder gegen ein verschlossenes Fördersystem anarbeitet, sondern daß im Moment des Verschließens bzw. des Umlenkens der Füllmasse ein Leerlaufkreislauf der Füllmasse in Bewegung gesetzt wird. Dies hat ferner Vorteile bezüglich der Meßgenauigkeit des Mengenmeßgerätes, da dieses in der Anlauf- bzw. Stopphase Meßungenauigkeiten zeigen kann. Beim Wiederöffnen der Verschlußvorrichtung, d.h. beim Umschalten des Umlenkschiebers wird dann vorteilhafterweise der Meß- bzw. Zählwert des Mengenmeßgerätes bzw. der Steuervorrichtung in einem geeigneten Moment zurückgesetzt bzw. gestartet.

Im folgenden wird die Erfindung anhand von Ausführungs-

6

formen unter Bezugnahme auf die Figuren genauer beschrieben. Es zeigen:

Fig. 1     eine vereinfachte Darstellung einer erfindungsgemäßen Portioniervorrichtung;

Fig. 2     eine andere Ausführungsform der erfindungsgemäßen Portioniervorrichtung in Sperrstellung;

Fig. 3     die Portioniervorrichtung von Fig. 2 in Durchlaßstellung und

Fig. 4     eine weitere Ausführungsform der erfindungsgemäßen Portioniervorrichtung.

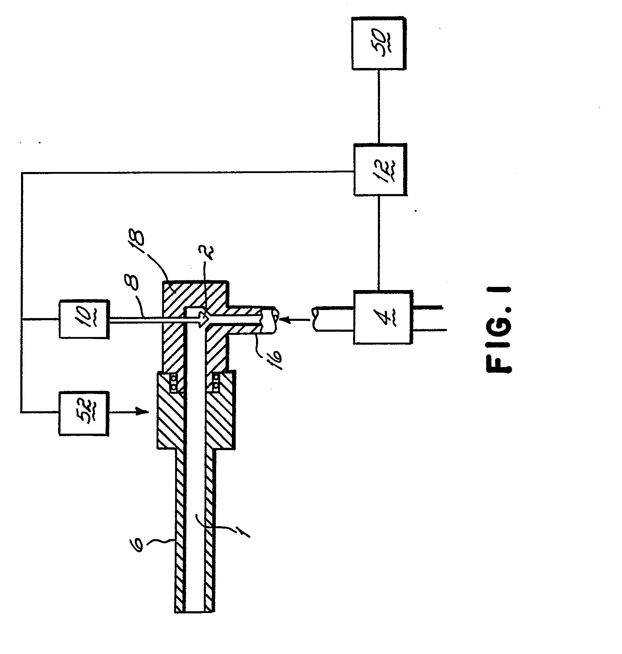

Fig. 1 zeigt eine mit einer Abdrehvorrichtung versehene
Portioniervorrichtung. Die Vorrichtung besteht aus der
Tülle 6, in deren Hohlraum der Füllmassenweg 1 von der
Zuführung 16 bis zur Tüllenspitze verläuft. Die Tülle mit
dem Füllmassenweg 1 ist aufgeteilt in das spitzenseitige
Teil 6, welches mit geeigneten (nicht gezeigten) Lagern
in Widerlagern drehbar gelagert ist und in das endseitige
Teil 18, welches ortsfest gelagert ist und die Widerlager
für das drehbare Teil 6 trägt. Im ortsfesten Tüllenteil 18 ist am Ende des Zuführweges 16 ein Ventilsitz vorgesehen, in welchen eine Ventilplatte 2 eingreifen kann, um den Zuführweg druckdicht zu verschließen. Die Ventilplatte 2 ist gelagert an einer Ventilstange 8, die gleitend abgedichtet im ortsfesten Teil 18 gelagert ist und betätigt werden kann durch eine Betätigungsvorrichtung 10, die von der noch zu beschreibenden Steuervorrichtung gesteuert wird.

Zum Abdrehen der Würstchenenden ist der spitzenseitige Teil der Tülle versehen, z.B. mit einem (in Fig. 1 nicht gezeigten) Zahnkranz, der durch einen geeigneten Antrieb (nicht gezeigt) und eine Steuervorrichtung 52 betätigt werden kann.

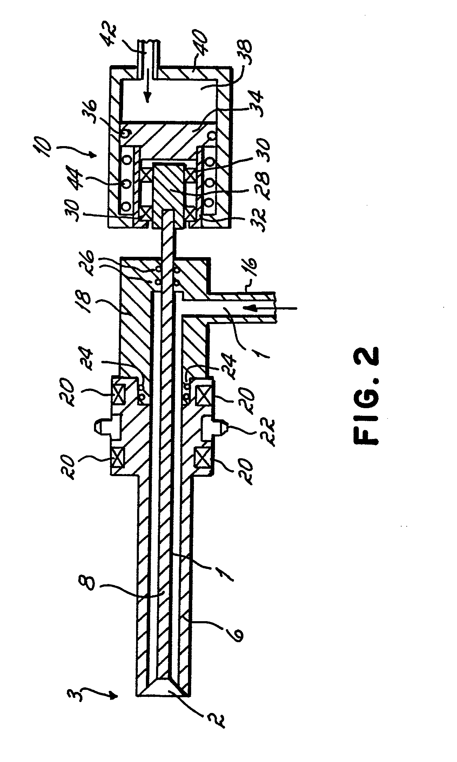

Fig. 2 zeigt eine vorteilhafte Ausführungsform der Erfindung, bei welcher die Verschlußeinrichtung 2 am Ende der Tüllenspitze 3 angeordnet ist. In dieser Ausführungsform verläuft die Ventilstange 8 durch die Länge des Hohlraums der Tülle und ist auf der Seite der Tüllenspitze 3 fest verbunden mit einer Ventilplatte, die im geschlossenen Zustand an geeigneten Flächen der Tüllenspitze 3 anliegt. Das andere Ende der Ventilstange 8 ist im anderen Ende der Tülle durch Dichtungen 26 abgedichtet gelagert

- 7 -

0143311

und geführt. Zum Abdrehen der Würstchenenden ist der spitzenseitige Teil der Tülle mit einem Zahnkranz 22 versehen, der betätigt werden kann durch einen in Fig. 2 nicht gezeigten Zahnradantrieb, um im richtigen Zeitpunkt das gefüllte Würstchen abzudrehen. Das spitzenseitige Ende der Tülle ist gleitend abgedichtet durch die Dichtungen 24 gegen den anderen Tüllenteil 18, der ortsfest an der Portioniervorrichtung befestigt ist, und in den die Zuführleitung 16 führt.

Das der Tüllenspitze entgegengesetzte Ende der Ventilstange 8 ist fest verbunden mit einem Endteil 28, welches Rollager 23 zum Ermöglichen einer Drehbewegung der Ventilstange trägt. Dies ist notwendig, damit beim Abdrehvorgang sich die Ventilstange frei drehen kann und nicht die Ventilplatte 2 auf ihrer Anlagefläche an der Tüllenspitze 3 gleiten muß. Die Rollenlager 30 finden ihr Widerlager in der Hülse 32, die im Zylindergehäuse 40 gleitfähig angeordnet ist.

Im Zylindergehäuse 40 verschiebbar angeordnet ist eine Kolbenplatte 34, die an der Hülse 32 anliegt und mit Dichtungen 36 druckdicht am Kolbengehäuse 40 anliegt. Zwischen der Kolbenplatte 34 und dem tüllenseitigen Ende

9

des Zylindergehäuses 40 ist eine Druckfeder 44 angeordnet.

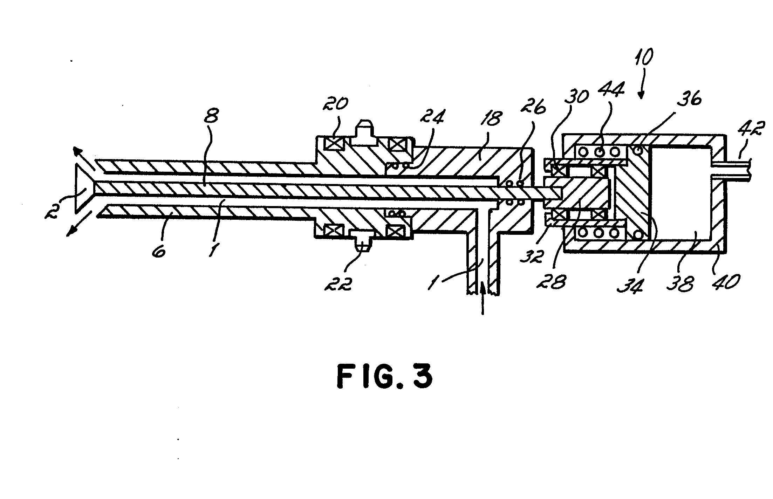

Wenn, gesteuert durch die noch später zu beschreibende Steuerungsvorrichtung, die Zuführung 42 zum Innenraum des Kolbengehäuses 38 mit Druckflüssigkeit oder Druckgas beaufschlagt wird, so verschiebt sich die Kolbenplatte 34 in Richtung auf die Tülle in Fig. 2 nach links, da sie gegen das Kolbengehäuse 40 durch die Dichtungen 36 druckdicht anliegt. Diese Linksverschiebung wird auf die Hülse 32 übertragen, die verschieblich im Gehäuse 40 angeordnet ist, und von dieser über die Lager 40 auf das Endstück 28 und die Ventilstange 8 übertragen. Dadurch wird die Ventilplatte 2 vom Tüllenende 3 abgehoben und gibt den Tüllenausgang frei, solange das Druckgleichgewicht aus Gas- bzw. Flüssigkeitsdruck im Raum 38 und dem Gegendruck der Feder 44 bestehenbleibt. Während dieser Zeit kann die unter Fülldruck stehende Füllmasse aus dem Zuführraum 1 austreten und z.B. in ein Würstchen gespritzt werden. Diese Stellung der Portioniervorrichtung ist in Fig. 3 gezeigt.

Wenn eine ausreichende Füllmassenmenge die Tülle passiert hat, schaltet die Steuervorrichtung die Druckgas- oder Flüssigkeitszufuhr zur Zuführung 42 wieder ab, so

10.

daß der Zylinderraum 38 druckfrei wird. Durch den Federdruck der Feder 44 wird die Kolbenplatte 34 und damit
die Hülse 32, das Endstück 28 und die Ventilstange 8
in die in Fig. 2 gezeigte Stellung zurückgezogen. Dadurch legt sich die Ventilplatte 2 wieder an das Tüllenende 3 an, so daß die Tülle endseitig druckdicht verschlossen ist und keine Füllmasse mehr austreten kann.
In diesem Moment betätigt die Steuervorrichtung die Abdrehvorrichtung mittels des Zahnkranzes 22, so daß das
gefüllte Würstchen abgedreht und verschlossen werden kann.

Sobald der Abdrehvorgang beendet ist, wird wieder
die Zuführung 42 mit Druck beaufschlagt, so daß sich das
Füllmassenventil 2,8,10 wieder öffnet und ein weiterer
Füllvorgang vollzogen werden kann.

Am Ende eines Würstchenstranges bleibt das Ventil
geschlossen, so daß endseitig aus der Tülle keine Füllmasse austreten kann und der Druck im Innenraum der
Tülle und der gesamten Füllmassenzuführung aufrechterhalten bleibt.

In gleicher Weise kann aber auch das Füllmassenven-

*II*

til 2,8,10 von Fig. 1 bis 3 nur zu Beginn und Ende des Füllvorgangs eines Würstchenstranges betätigt werden und die Portionierung der einzelnen Würstchen vorgenommen werden nur durch Ansteuerung der Abdrehvorrichtung, ohne daß vorher das Füllmassenventil 2,8,10 geschlossen wird.

Diese Betätigung des Füllmassenventils zu Beginn und zu Ende eines Würstchenstranges kann entweder von Hand oder durch das Steuergerät 12 vorgenommen werden.

Wie schon eingangs erwähnt, ist es besonders vorteilhaft, wenn das Mengenmeßgerät ein magnetisch-induktiver Durchflußmesser 4 ist. Überraschenderweise sind solche magnetisch-induktiven Durchflußmeßgeräte auch für das Messen von derartig inhomogenen Massen wie Wurstbrät und ähnliches geeignet.

Dieses Durchflußmeßgerät macht sich die Tatsache zunutze, daß die Würstchenmasse eine ausreichende Mindestleitfähigkeit hat, die bei Bewegung der Masse durch das Meßgerät durch das außen angelegte Magnetfeld des Meßgerätes eine magnetische Induktion auftritt, die senkrecht zur Strömungsrichtung und zum angelegten Magnetfeld eine Spannung entstehen läßt, die proportional zur Strömungsgeschwindigkeit der leitfähigen Masse innerhalb des Meßgerätes ist. Durch geeignete Eichung läßt sich somit direkt die Geschwindigkeit und bei bekanntem Querschnitt
durch das Meßgerät auch der Mengenvorschub pro Zeit bestimmen. Das Steuergerät 12, welchem dieses Geschwindigkeitssignal zugeführt wird, bildet das Wegintegral und
somit das Volumenintegral über die Zeit. Wenn ein durch
eine Einstellvorrichtung 50 vorbestimmtes Volumen das
Mengenmeßgerät 4 passiert hat, gibt das Steuergerät ein
geeignetes Signal an ein in der Druckzuführung 42 angeordnetes Ventil, so daß dieses schließt und gleichzeitig
der Druck aus dem Kolbenraum 38 abgelassen wird, so daß
das Brätventil 2 sich schließt.

Eine geeignete Zeitspanne danach steuert das Steuergerät 12 den Motor 52 an, der über ein Zahnrad die
Abdrehvorrichtung in Bewegung setzt und so das Würstchen
abdreht. Nach dem Abdrehvorgang öffnet das Steuergerät
12 das Ventil 48 wieder, so daß der von einem hydraulischen
Motor erzeugte Druck wieder auf die Kolbenplatte 34 einwirkt und somit das Ventil 2 wieder geöffnet wird und
neue Füllmasse in das nächste Würstchen eintreten kann.

Beim Start der Portioniervorrichtung wird das Ventil 48 solange offen gehalten, bis die erste Füllmasse aus der Tüllenspitze 3 austritt. Dann wird das Ventil 2 geschlossen und solange bei geschlossenem Ventil Füllmasse über den Weg 1 nachgeführt, bis sich der notwendige Fülldruck aufgebaut hat. Nach Erreichen des notwendigen Fülldruckes wird die Portioniervorrichtung gestartet und es bleibt während des gesamten Füll- und Portionierzyklus ein konstanter Fülldruck in der gesamten Leitung aufrechterhalten. Dadurch wird eine sehr genaue Portionierung in Abhängigkeit von der durch das Meßgerät fließenden Füllmasse bzw. deren Geschwindigkeit ermöglicht.

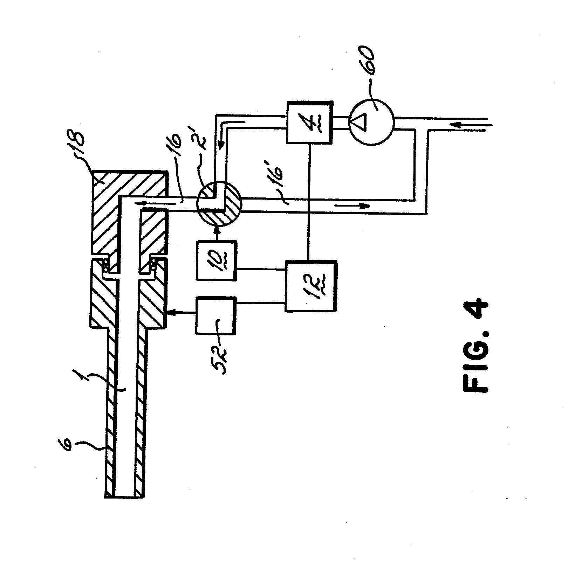

In der besonders vorteilhaften Ausführungsform von Fig. 4 sind Tülle und Abdrehvorrichtung in der gleichen Weise ausgestaltet und gesteuert wie in den vorangegangenen Beispielen.

In dieser Ausführungsform ist die Verschlußeinrichtung ein Umlenkschieber 2', der im Wege 16 der Füllmasse zwischen der Ausstoßtülle 6 und dem Mengenmeßgerät 4 angeordnet ist. Wenn der Füllmassenweg 16 zur Tülle 6 verschlossen werden soll, so wird der Umlenkschieber 2', der während des Füllvorganges eine freie Verbindung zwischen Tülle und Mengenmeßgerät gewährleistet, umgeschaltet, so daß er den Füllmassenweg vom Meßgerät 4 umleitet auf eine Rückführleitung 16', die die Füllmasse zurückführt zum Füllmassenweg vor der Fülldruckquelle 60.

Dies hat den Vorteil, daß, wenn die Füllmassenzufuhr zur Tülle gesperrt ist, trotzdem ein stetiger Transport der Füllmasse über die Fülldruckquelle 60, das Mengenmeßgerät 4, den Umlenkschieber 2' und die Rückführleitung 16' aufrechterhalten werden kann. Es braucht deshalb die Fülldruckquelle 60 nicht angehalten werden. Dies hat den erheblichen Vorteil, daß Meßungenauigkeiten im Mengenmeßgerät 4 während einer sonst nötigen Anlauf- bzw. Stoppphase nicht auftreten können, da ein stetiger gleichbleibender Füllmassenumlauf aufrechterhalten wird.

In dem Moment, wo der Abdrehvorgang beendet ist, wird der Umlenkschieber 2' wieder in die in Fig. 4 gezeigte Stellung bewegt und gleichzeitig in einem geeigneten Moment der Zählwert bzw. Meßwert des Mengenmeßgerätes im Steuergerät 12 zurückgesetzt oder neu gestartet, so daß eine neue Würstchenportion gemessen werden kann.

15

Am Ende eines Würstchenstranges bleibt das Umlenkventil 2' in seiner Rückführstellung, so daß ein stetiger Kreislauf der Brätmasse aufrechterhalten bleibt. Durch diesen aufrechterhaltenen Kreislauf ist gewährleistet, daß im gesamten Füllmassenweg bis zum Umlenkventil 2' ein konstanter Druck aufrechterhalten bleibt, der nicht abfällt, da die Fülldruckquelle nicht abgestellt werden muß.

- I -

Portioniervorrichtung
-----------------------

P a t e n t a n s p r ü c h e
-------------------------------------

1. Vorrichtung zum Portionieren von pastöser Füllmasse, insbesondere Wurstbrät, die durch eine Fülldruckquelle unter Fülldruck gehalten wird und durch eine von einem Mengenmeßgerät gesteuerte Verschlußeinrichtung und/oder Abdrehvorrichtung in einzelne möglichst mengenkonstante Portionen aufgeteilt wird, dadurch g e k e n n z e i c h - n e t , daß der Mengenmesser ein im Wege der Füllmasse

0143311

## 2

hinter der Fülldruckquelle angeordnetes Mengenmeßgerät ist, das kontinuierlich die geförderte Füllmassenmenge mißt.

2. Vorrichtung nach Anspruch 1, dadurch g e k e n n -
z e i c h n e t , daß die Mengenmeßvorrichtung (4) die
Geschwindigkeit der Füllmasse beim Durchlaufen der Meßvorrichtung mißt und daß ein Steuergerät (12) aus dem
Geschwindigkeitssignal ein dem Wegintegral entsprechendes
Steuersignal für die Verschlußeinrichtung und/oder Abdrehvorrichtung erzeugt.

3. Vorrichtung nach Anspruch 2, dadurch g e k e n n -
z e i c h n e t , daß das Mengenmeßgerät (4) ein magnetisch-
induktiver Durchflußmesser ist.

4. Vorrichtung nach Anspruch 1 bis 3, dadurch g e -
k e n n z e i c h n e t , daß die Verschlußvorrichtung (2)
im Wege der Füllmasse hinter dem Mengenmesser am Ende des
Füllmassenweges (1) durch die Vorrichtung angeordnet ist.

5. Vorrichtung nach Anspruch 4, dadurch g e k e n n -
z e i c h n e t , daß die Verschlußvorrichtung durch eine
im Innern der Ausstoßtülle (6) geführte Ventilstange (8).

- 2 -

gehaltene Ventilplatte (2) ist.


6. Vorrichtung nach Anspruch 4 oder 5, dadurch g e -
k e n n z e i c h n e t , daß die Ventilplatte (2) über
die Ventilstange (8) durch eine hinter der Tülle liegende Vorrichtung (10) betätigbar ist.


7. Vorrichtung nach einem der Ansprüche 4 bis 6,
dadurch g e k e n n z e i c h n e t , daß die Ventilstange (8) an der Betätigungsvorrichtung (10) leicht drehbar gelagert ist.


8. Vorrichtung nach Anspruch 1, dadurch g e k e n n -
z e i c h n e t , daß die Verschlußvorrichtung ein im Wege
der Füllmasse zwischen dem Meßgerät und der Tülle angeordneter Umlenkschieber ist, und daß eine Rückführleitung
für die Füllmasse vom Umlenkschieber zum Füllmassenweg
vor der Fülldruckquelle und dem Meßgerät vorgesehen ist.

FIG. I

FIG. 2

FIG. 3

**FIG. 4**

Europäisches
Patentamt

**EUROPÄISCHER RECHERCHENBERICHT**

Nummer der Anmeldung

EP 84 11 2535

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 061 995 (C.HOEGGER & CIE.)<br><br>* Seite 5, Absatz 3; Seite 7, Absatz 2 - Seite 10, Absatz 2 * | 1,2,4 | A 22 C 11/02 |
| A | | 5-7 | |
| | --- | | |
| A | FR-A-2 110 850 (UNION CARBIDE CORPORATION)<br><br>* Seite 4, Zeile 32 - Seite 6, Zeile 4 * | 5,6 | |
| | --- | | |
| A | DE-C- 376 593 (HEIKE)<br><br>* Insgesamt * | 8 | |
| | | | RECHERCHIERTE SACHGEBIETE (Int. Cl.4) |
| | --- | | |
| A | WO-A-81 03 259 (GRÜNECKER)<br><br>* Seite 14, Zeilen 10-20; Seite 15, Zeile 6 - Seite 17, Zeile 17 * | 1,2,6 | A 22 C |
| D | & DE-A-3 018 793 | | |
| | --- | | |
| P,A | FR-A-2 538 104 (BAADER)<br><br>* Seite 2, Zeile 35 - Seite 3, Zeile 24 * | 1,2,4 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 15-02-1985 | DE LAMEILLEURE D. |

**KATEGORIE DER GENANNTEN DOKUMENTEN**
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82